# EUROPEAN PATENT APPLICATION

(11) **EP 4 170 811 A1**
(43) Date of publication of application: **26.04.2023**
(21) Application number: 21214107.1
(22) Date of filing: 13.12.2021
(51) Int. Cl.: H01M 50/507, H01M 50/526, H01M 50/54

(54) **BATTERY MODULE FOR ELECTRIC VEHICLE**

(30) Priority: 25.10.2021 KR 20210142634
(71) Applicant: A.F.W. Co., Ltd., Waegwan-eup (KR)
(72) Inventor: SEO, Jong Duk, 43015 Daegu (KR); LEEM, Young Min, 42922 Daegu (KR)
(74) Representative: Frenkel, Matthias Alexander

(57) **Abstract**

According to an embodiment of the disclosure, a battery module for an electric vehicle comprises a module case, a plurality of battery cells installed in the module case, a plurality of sensing busbars installed on one side surface of the module case and electrically connecting the plurality of battery cells, and a plurality of power busbars electrically connected with a first end and a second end, respectively, of the plurality of sensing busbars.

## Description

### TECHNICAL FIELD

The present invention relates to a battery module for an electric vehicle, and more particularly, to a battery module for an electric vehicle capable of significantly reducing manufacturing costs and weight.

### DESCRIPTION OF RELATED ART

An electric vehicle refers to an electricity-powered vehicle that obtains driving energy by rotating a motor with electricity from a battery rather than obtaining driving energy from combustion of a fossil fuel.

These electric vehicles were developed in 1873 before internal gasoline vehicles but were not put to commercial use due to the limitations of storage batteries.

However, as environmental and resource issues emerge, worldwide automakers have been jumping into the competition of development of electrical vehicles since the 1990s.

Currently, as compared to general internal combustion engine vehicles, electric vehicles are expensive and thus gain less popularity. To be as much competitive in price as the conventional vehicle, the battery price of the electric vehicle which amounts to 40% of the total manufacturing cost needs to be down to 100 dollars per 1kWh.

Therefore, recent research and development efforts of electric vehicle makers and battery manufacturers focus primarily on reducing the battery price.

In general, a battery modules used in electric vehicles include a metal module case, a plurality of battery cells received inside the module case, a sensing busbar electrically connected with the electrode leads of the battery cell, and a power busbar electrically connected with the sensing busbar.

Among the components of the conventional battery module for electric vehicles, the busbar is typically formed of copper and is thus heavy and pricey.

12 to 20 busbars are installed in a single battery module, and a battery pack installed in an electric vehicle typically has 6 to 20 battery modules.

As such, the battery module including busbars formed of copper significantly increases the weight of the battery pack, which leads to a reduction in energy efficiency.

It also increases the manufacturing costs.

### SUMMARY

According to an embodiment of the disclosure, there is provided a battery module for an electric vehicle capable of significantly reducing manufacturing costs and weight.

According to an embodiment of the disclosure, a battery module for an electric vehicle comprises a module case, a plurality of battery cells installed in the module case, a plurality of sensing busbars installed on one side surface of the module case and electrically connecting the plurality of battery cells, and a plurality of power busbars electrically connected with a first end and a second end, respectively, of the plurality of sensing busbars.

The module case may include a case part including a receiving space and receiving the plurality of battery cells in the receiving space, a cover part formed on an upper portion of the case part to open or close the upper portion of the case part, a plurality of lead slit parts exposing electrode leads drawn out of the plurality of battery cells to an outside, and a busbar installation part for installing the plurality of sensing busbars and the plurality of power busbars.

Each of the plurality of sensing busbars may include a first sensing layer part formed of aluminum and a second sensing layer part formed of copper and formed on one surface of the first sensing layer part.

A thickness ratio of the first sensing layer part to the second sensing layer part may be 80 to 90 10 to 20.

A thickness of the second sensing layer part may be 0.4mm or more.

The sensing busbar may further include a sensing busbar bonding layer formed between the first sensing layer part and the second sensing layer part and having a bonding force of 9kgf/25mm or more.

The sensing busbar may further include a sensing busbar plating layer formed on each of a surface of the first sensing layer part and a surface of the second sensing layer part.

The power busbar may include a first power layer part formed of aluminum and a second power layer part formed on one surface of the first power layer part and formed of copper.

A thickness ratio of the first power layer part to the second power layer part may be 80 to 90 10 to 20.

The power busbar may further include a power busbar bonding layer formed between the first power layer part and the second power layer part and having a bonding force of 9kgf/25mm or more.

The power busbar may further include a power busbar plating layer formed on each of a surface of the first power layer part and a surface of the second power layer part.

According to various embodiments of the disclosure, the weight of the battery module may be reduced by enhancing the structure of the sensing busbars and the power busbars electrically connecting a plurality of battery cells constituting the battery module. Thus, it is possible to enhance the energy efficiency of the electric vehicle using the battery module.

Further, the manufacturing costs of the battery module may be significantly reduced, and so may be the manufacturing costs of the electric vehicle.

It is also possible to increase the bonding force between the sensing busbar and the power busbar and prevent aluminum corrosion and galvanic corrosion by salt water.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
FIG. 1 is a view illustrating a battery module of an electric vehicle according to an embodiment of the disclosure;
FIG. 2 is a cross-sectional view illustrating a battery module of an electric vehicle according to an embodiment of the disclosure;
FIG. 3 is a view illustrating a sensing busbar as illustrated in FIG. 1; and
FIG. 4 is a view illustrating a power busbar as illustrated in FIG. 1.

### DETAILED DESCRIPTION

Embodiments of the present invention are now described with reference to the accompanying drawings in such a detailed manner as to be easily practiced by one of ordinary skill in the art. However, the embodiments set forth herein are provided merely for a better understanding of the structure and functions, and the scope of the disclosure should not be limited thereby or thereto. Thus, various changes or modifications may be made to the embodiments and various equivalents thereof may be included in the scope of the disclosure. It should be noted that a specific embodiment of the disclosure need not include all of the objectives or effects set forth herein and the scope of the disclosure should not be limited thereto or thereby.

The terms as used herein may be defined as follows.

The terms "first" and "second" are used to distinguish one component from another, and the scope of the disclosure should not be limited thereby.For example, a first component may be denoted a second component, and vice versa without departing from the scope of the present disclosure.

When a component is "connected to" or "coupled to" another component, the component may be directly connected or coupled to the other component, or other component(s) may intervene therebetween. In contrast, when a component is "directly connected to" or "directly coupled to" another component, no other intervening components may intervene therebetween. Other terms or phrases representing the relationship between two or more components, such as 'between' and 'adjacent to,' may be interpreted the same way.

IAs used herein, the singular forms "a," "an," and "the" are intended to include the plural forms as well, unless the context clearly indicates otherwise. It will be further understood that the terms "comprise" and/or "have," when used in this specification, specify the presence of stated features, integers, steps, operations, elements, and/or components, but do not preclude the presence or addition of one or more other features, integers, steps, operations, elements, components, and/or groups thereof.

Unless otherwise defined in connection with embodiments of the present disclosure, all terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a battery module for an electric vehicle according to an embodiment of the disclosure is described in detail with reference to the drawings.

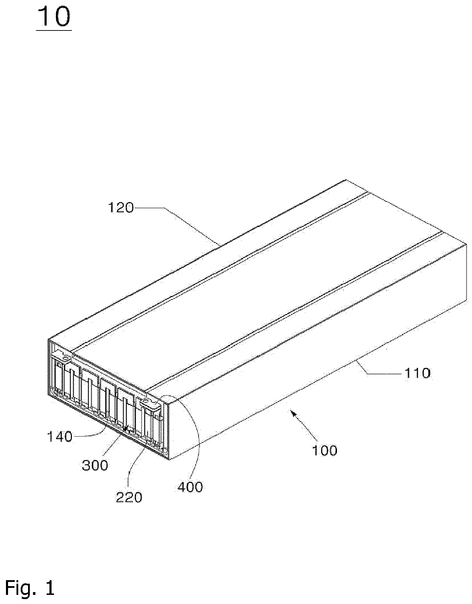

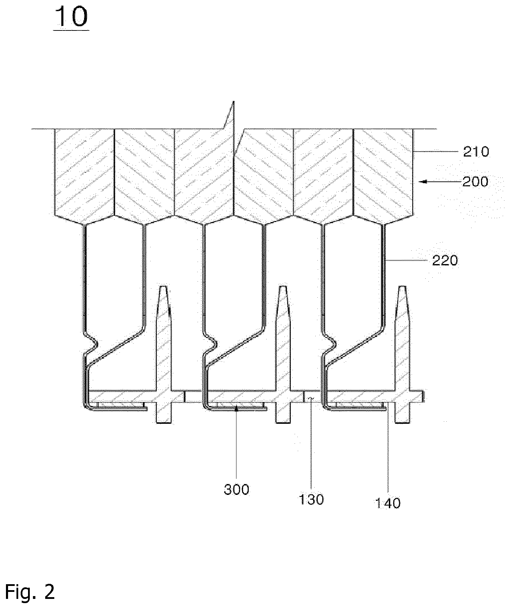

FIG. 1 is a view illustrating a battery module of an electric vehicle according to an embodiment of the disclosure. FIG. 2 is a cross-sectional view illustrating a battery module of an electric vehicle according to an embodiment of the disclosure.

Referring to FIGS. 1 to 2, a battery module 10 for an electric vehicle includes a module case 100, a battery cell 200, a sensing busbar 300, and a power busbar 400.

The module case 100 receives a plurality of battery cells 200 therein. The sensing busbar300 and the power busbar 400 may be installed on one side of the module case 100.

In an embodiment, the module case 100 may include a case part 110, a cover part 120, a lead slit part 130, and a busbar installation part 140.

The case part 110 may have a receiving space therein, and the battery cell 200 may be installed in the receiving space.

In an embodiment, the case part 110 is preferably formed of stainless steel to protect the battery cell 200 from external shock, heat, vibration, and the like.

Since stainless steel has a high melting point, it may reduce the ignition of the battery and thus reduce the risk of explosion of the battery due to ignition of the battery. Further, since stainless steel has high strength, it may protect the battery cell 200 from external physical impact. Further, stainless steel is high resistant to corrosion and thus does not easily rust.

In an embodiment, the case part 110 may include at least one shock-absorbing pads (not shown in the drawings for convenience of illustration) on an inner surface thereof to absorb external shocks and hence prevent shocks from being transferred to the battery cell 200.

In an embodiment, the shock-absorbing pad is preferably formed of a material having elasticity, such as a sponge, so that a plurality of battery cells 200 may be received in the receiving space of the case part 110 as easily as possible.

The cover part 120 may be formed on the upper portion of the case part 110 and opens and closes the upper portion of the case part 110.

In an embodiment, the cover part 120 may be formed of the same stainless steel as the case part 110.

A plurality of lead slit parts 130 may be formed, with a predetermined gap (e.g., 5 to 10 mm), in one side surface of the case part 110 to expose electrode leads 220 from the battery cell 200 to the outside of the case part 110.

In an embodiment, the lead slit parts 130 may be formed on either the front surface or the rear surface of the case part 110 or both the front surface and the rear surface.

Bus bar installation pars 140 may be formed on both sides of the lead slit part 130 and enables the sensing busbar300 or the power busbar 400 to be installed.

In an embodiment, the busbar installation part 140 may be formed of an insulating material, such as resin, and allows for installation of the sensing busbar 300 electrically connected with the electrode lead 220 exposed through the lead slit part 130 or the power busbar 400 electrically connected with the sensing busbar 300.

A plurality of battery cells 200 are installed inside the module case 100.

In an embodiment, the battery cells 200 are received in the receiving space provided in the case part 100. Preferably, the battery cells 200 are formed in a pouch type, but are not limited thereto.

In an embodiment, the battery cell 200 may include a cell case 210, an electrode assembly (not shown in the drawings for convenience of illustration), and an electrode lead 220.

The cell case 210 includes an upper case and a lower case formed of a multilayered pouch film in which a resin layer, a metal layer, and a resin layer are sequentially stacked. The electrode assembly is received in the cell case 210, and the electrode lead 220 protrudes to the outside. In this state, the upper case and the lower case are thermally fused and sealed, with their respective edges contacting each other.

The electrode assembly has a form in which separators are interposed between positive electrode plates and negative electrode plates that are alternately and repeatedly stacked and, preferably, separators are positioned on two opposite outermost sides thereof, for insulation.

Here, the positive electrode plate is formed of a positive electrode current collector and a positive electrode active material layer coated on one surface thereof, and a positive electrode uncoated area not coated with the positive electrode active material is formed at one end thereof to function as a positive electrode tab.

The negative electrode plate is formed of a negative electrode current collector and a negative electrode active material layer coated on one or two opposite surfaces thereof, and a negative electrode uncoated area not coated with the negative electrode active material is formed at one end thereof to function as a negative electrode tab.

The separator is interposed between the positive electrode plate and the negative electrode plate to prevent direct contact between the electrode plates having different polarities. The separator may be formed of a porous material to enable the movement of ions using the electrolyte as a medium between the positive electrode plate and the negative electrode plate.

The electrode leads 220 are electrically connected with the positive electrode tab and the negative electrode tab, respectively, and drawn out of the cell case 210.

In this case, a pair of electrode leads 220 may be formed to protrude from one side in the length direction of the battery cell 200 or may be formed to protrude from two opposite sides in the length direction of the battery cell 200.

A plurality of sensing busbars 300 may be installed on one side of the module case 100 to electrically connect the battery cells 200 to each other.

In other words, the electrode leads 220 exposed to the outside of the case part 100 through the lead slit parts 130 are bent to tightly contact the sensing busbars 300 and are welded to the plurality of sensing busbars 300.

In an embodiment, the sensing busbar300 may be formed of a clad metal in which copper and aluminum are bonded.

A plurality of power busbars 400 are provided and are electrically connected with one end and the other end, respectively, of the plurality of sensing busbars 300 and serve as current terminals connecting the outside and inside of the battery module.

In an embodiment, the power busbars 400 may be electrically connected with the leftmost sensing busbar and the rightmost sensing busbar, respectively, among the plurality of sensing busbars.

In an embodiment, the power busbar400 may be formed of a clad metal in which copper and aluminum are bonded.

The battery module 10 for an electric vehicle having the above-described configuration may reduce weight by enhancing the structure of the power busbars 400 and the sensing busbars 300 electrically connecting the plurality of battery cells 200, thereby enhancing the energy efficiency of the electric vehicle using the battery module.

It is also possible to significantly reduce the manufacturing costs of the battery module 10 and hence the manufacturing costs of electric vehicles.

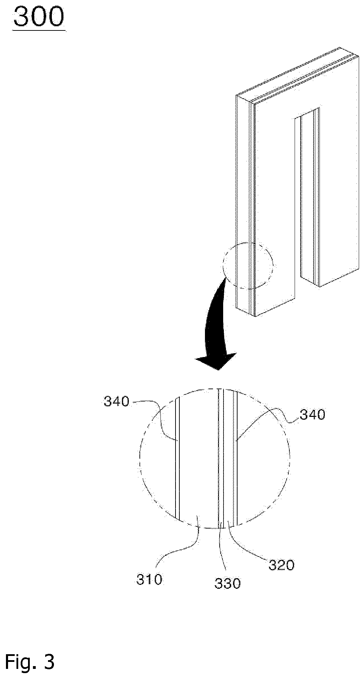

FIG. 3 is a view illustrating a sensing busbar as illustrated in FIG. 1.

Referring to FIG. 3, a sensing busbar300 includes a first sensing layer part 310 and a second sensing layer part 320.

The first sensing layer part 310 is formed of aluminum.

In an embodiment, the first sensing layer part 310 may be formed in various shapes, such as a rectangle or U.

The second sensing layer part 320 may be formed on one surface of the first sensing layer part 310 and is formed of copper.

In an embodiment, the second sensing layer part 320 may have a shape corresponding to the first sensing layer part 310.

In an embodiment, the second sensing layer part 320 may be bonded to one surface of the first sensing layer part 310 by friction welding.

In this case, the first sensing layer part 310 and the second sensing layer part 320 may be formed in a thickness ratio of 80 to 90:10 to 20, and the second sensing layer part 320 has a thickness of at least 0.4 mm or more.

For example, when the content ratio of aluminum to copper is 85:15, the thickness ratio of the first sensing layer part 310 to the second sensing layer part 320 may be 85:15, and the weight ratio of the first sensing layer part 310 to the second sensing layer part 320 may be 63:37.

Further, when the size of the sensing busbar300 has a vertical length of 100 mm, a horizontal length of 10 mm, and a thickness of 3 mm, the thickness of the first sensing layer part 310 may be 2.55 mm, and the thickness of the second sensing layer part 320 may be 0.45 mm.

Since the sensing busbar300 is connected with the electrode lead 220 of the battery cell 200 by welding, the thickness of the second sensing layer part 320 needs to be 0.4 mm or more. If the thickness of the second sensing layer part 320 is less than 0.4mm, the aluminum inside the CCA may be eluted to the surface to cause cracks during welding with the electrode lead 220.

The sensing busbar300 having the above-described configuration may further include a sensing busbar bonding layer 330 and a sensing busbar plating layer 340.

The sensing busbar bonding layer 330 may be formed between the first sensing layer part 310 and the second sensing layer part 320 and has a bonding force of 9 kgf/25 mm or more.

In other words, since the bonding force between the first sensing layer part 310 and the second sensing layer part 320 is 9 kgf/25 mm or more, the first sensing layer part 310 and the second sensing layer part 320 are not separated when the sensing busbar 300 and the electrode lead 220 are welded.

According to an embodiment, by friction welding, the first sensing layer part 310 is melted and forms an aluminum diffusion layer, and the second sensing layer part 320 is melted and forms a copper diffusion layer. The aluminum diffusion layer and the copper diffusion layer are mixed to form a mixed layer. The mixed layer is hardened, forming the sensing busbar bonding layer 330.

The sensing busbar plating layer 340 is formed on each of a surface of the first sensing layer part 310 and a surface of the second sensing layer part 320.

In an embodiment, the sensing busbar plating layer 340 may be a nickel-plated layer on each of the surface of the first sensing layer part 310 and the surface of the second sensing layer part 320 by various techniques, such as a reel-to-reel technique.

The sensing busbar300 having the above-described configuration may enhance the bonding force between the first sensing layer part 310 formed of aluminum and the second sensing layer part 320 formed of copper and prevent galvanic corrosion and aluminum corrosion by salt water.

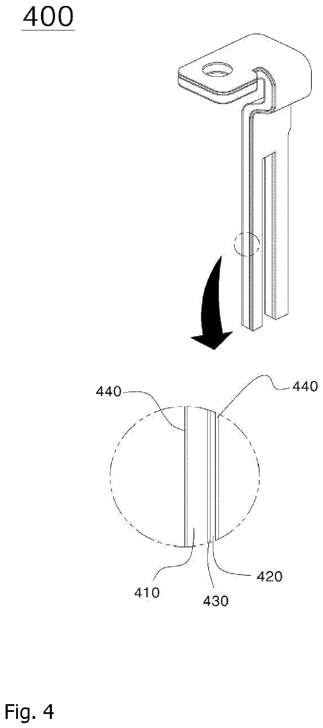

FIG. 4 is a view illustrating a power busbar as illustrated in FIG. 1.

Referring to FIG. 4, a power busbar 400 includes a first power layer part 410 and a second power layer part 420.

The first power layer part 410 is formed of aluminum.

In an embodiment, the first power layer part 410 may be formed in various shapes, such as a rectangle or U.

The second power layer part 420 may be formed on one surface of the first power layer part 410 and is formed of copper.

In an embodiment, the second power layer part 420 may have a shape corresponding to the first power layer part 410.

In an embodiment, the second power layer part 420 may be bonded to one surface of the first power layer part 410 by friction welding.

In this case, the first power layer part 410 and the second power layer part 420 may be formed in a thickness ratio of 80 to 90:10 to 20, and the second power layer part 420 has a thickness of at least 0.4 mm or more.

For example, when the content ratio of aluminum to copper is 85:15, the thickness ratio of the first power layer part 410 to the second power layer part 420 may be 85:15, and the weight ratio of the first power layer part 410 to the second power layer part 420 may be 63:37.

The thickness of the first power layer part 410 may be 2.55 mm, and the thickness of the second power layer part 420 may be 0.45 mm.

The power busbar400 having the above-described configuration may further include a power busbar bonding layer 430 and a power busbar plating layer 440.

The power busbar bonding layer 430 may be formed between the first power layer part 410 and the second power layer part 420 and has a bonding force of 9 kgf/25 mm or more.

In other words, since the bonding force between the first power layer part 410 and the second power layer part 420 is 9 kgf/25 mm or more, the first power layer part 410 and the second power layer part 420 are not separated when the power busbar 400 and the sensing busbar 300 are connected.

According to an embodiment, by friction welding, the first power layer part 410 is melted and forms an aluminum diffusion layer, and the second power layer part 420 is melted and forms a copper diffusion layer. The aluminum diffusion layer and the copper diffusion layer are mixed to form a mixed layer. The mixed layer is hardened, forming the power busbar bonding layer 430.

The power busbar plating layer 440 is formed on each of a surface of the first power layer part 410 and a surface of the second power layer part 420.

In an embodiment, the power busbar plating layer 440 may be a nickel-plated layer on each of the surface of the first power layer part 410 and the surface of the second power layer part 420 by various techniques, such as a reel-to-reel technique.

The power busbar400 having the above-described configuration may enhance the bonding force between the first power layer part 410 formed of aluminum and the second power layer part 420 formed of copper and prevent galvanic corrosion and aluminum corrosion by salt water.

To identify mechanical and electrical properties of the sensing busbar 300 composed of two layers including the first sensing layer part 310 and the second sensing layer part 320 and the power busbar 400 composed of two layers including the first power layer part 410 and the second power layer part 420, an experiment for comparison with the material properties of a conventional busbar formed of copper used in a battery module and a busbar composed of three layers were performed, and the results of the experiment are shown in Table 1 below.

**[Table 1]**

| No. | properties | unit | Cu | | CCA | | |
|---|---|---|---|---|---|---|---|
| | | | 2t | 3t | 3layer-2t | 3layer-3t | 2layer-3t |
| 1 | Cu thickness | mm | 2 | 3 | 0.3 | 0.45 | 0.45 |
| 2 | weight | 9 | 10.7 | 16.1 | 4.3 | 6.5 | 6.5 |
| 3 | Tensile strength | Kgf/mm² | 25.8 | 26.25 | 14.813 | 14.951 | 11.887 |
| 4 | Elongation | % | 56.24 | 63.58 | 43.38 | 46.39 | 70.05 |
| 5 | Electrical resistance | mΩ | 0.019 | 0.017 | 0.029 | 0.026 | 0.026 |
| 6 | Electrical conductivity | IACS, % | 100.1 | 100.7 | 66.7 | 66.5 | 64.7 |
| 7 | Temperature rise (ΔT) | °C | 24.3 | 21.8 | 27.9 | 22.4 | 23.7 |

As a result of the experiment, it is identified that, for the tensile strength, electrical resistance, and electrical conductivity, the conventional copper busbar is superior, but the two-layer or three-layer busbar is lightweight due to a reduction in the amount of copper and exhibit a similar temperature rise property similar to the conventional copper busbar. In particular, it is identified that the two-layer busbar has high elongation and thus has excellent workability.

Further, the two-layer and three-layer busbars have nearly similar properties. However, as two-layer busbars are easier to manufacture than three-layer busbars, two-layer busbars have better productivity and are useful in relevant industry.

The embodiments of the disclosure may be implemented by a program or application for implementing the functions of the components of the embodiments, as well as by the above-described apparatus and/or methods, or may also be implemented by a recording medium storing the program. Such implementation may be readily made by one of ordinary skilled in the art from the foregoing description of the embodiments.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. A battery module for an electric vehicle, comprising:
a module case;
a plurality of battery cells installed in the module case;
a plurality of sensing busbars installed on one side surface of the module case and electrically connecting the plurality of battery cells; and
a plurality of power busbars electrically connected with a first end and a second end, respectively, of the plurality of sensing busbars.

2. The battery module of claim 1, wherein the module case includes:
a case part including a receiving space and receiving the plurality of battery cells in the receiving space;
a cover part formed on an upper portion of the case part to open or close the upper portion of the case part;
a plurality of lead slit parts exposing electrode leads drawn out of the plurality of battery cells to an outside; and
a busbar installation part for installing the plurality of sensing busbars and the plurality of power busbars.

3. The battery module of claim 1, wherein each of the plurality of sensing busbars includes a first sensing layer part formed of aluminum and a second sensing layer part formed of copper and formed on one surface of the first sensing layer part.

4. The battery module of claim 3, wherein a thickness ratio of the first sensing layer part to the second sensing layer part is 80 to 90 : 10 to 20.

5. The battery module of claim 3, wherein a thickness of the second sensing layer part is 0.4mm or more.
